# EUROPEAN PATENT APPLICATION

(11) **EP 4 708 039 A1**
(43) Date of publication of application: **11.03.2026**
(21) Application number: 24842276.8
(22) Date of filing: 11.07.2024
(51) Int. Cl.: G06F 9/451

(54) **DISPLAY METHOD AND ELECTRONIC DEVICE**

(30) Priority: 18.07.2023 CN 202310883955
(71) Applicant: Huawei Technologies Co., Ltd., Shenzhen, Guangdong 518129 (CN)
(72) Inventor: HUANG, Jing, Shenzhen, Guangdong 518129 (CN); WANG, Miao, Shenzhen, Guangdong 518129 (CN); YAO, Liying, Shenzhen, Guangdong 518129 (CN); LIU, Chunliang, Shenzhen, Guangdong 518129 (CN)
(74) Representative: Pfenning, Meinig & Partner mbB
(86) International application number: PCT/CN2024/104982
(87) International publication number: WO 2025/016282

(57) **Abstract**

This application provides a display method and an electronic device. The method may be applied to an electronic device. The method includes: receiving a plurality of notification messages of different categories; displaying a first display interface of a notification center in response to an operation of opening the notification center, where the first display interface includes a plurality of display partitions, each of the plurality of display partitions includes a plurality of notification messages coming from different applications but belonging to a same category, and categories of notification messages included in different display partitions are different; and displaying, in a collapsed manner in response to an operation of collapsing a target display partition in the plurality of display partitions, notification messages that are of a plurality of different applications and that are included in the target display partition. According to the technical solutions, when a large quantity of notification messages are displayed in the target display partition, a user may conveniently collapse the notification messages in batches, to make the display interface of the notification center more concise.

## Description

This application claims priority to Chinese Patent Application No. 202310883955.5, filed with the China National Intellectual Property Administration on July 18, 2023 and entitled "DISPLAY METHOD AND ELECTRONIC DEVICE", which is incorporated herein by reference in its entirety.

### TECHNICAL FIELD

Embodiments of this application relate to the field of electronic technologies, and more specifically, to a display method and an electronic device.

### BACKGROUND

In a process of using an electronic device, a user often views a notification center to obtain some notification messages. When there are a large quantity of notification messages in the notification center, the electronic device generally arranges the messages in a time sequence of receiving the notification messages. However, when there are a large quantity of notification messages, some important messages may be missed by the user. In addition, excessive notification messages may cause trouble to the user.

### SUMMARY

This application provides a display method and an electronic device. According to the technical solutions, notification messages of different categories may be displayed in different display partitions based on categories of notification messages, to avoid a user from missing an important notification. In addition, the electronic device may further implement batch management of a plurality of notification messages based on an operation of the user, to improve user experience.

According to a first aspect, a display method is provided. The method is applied to an electronic device, and the method includes: receiving a plurality of notification messages of different categories; displaying a first display interface of a notification center in response to an operation of opening the notification center, where the first display interface includes a plurality of display partitions, and each of the plurality of display partitions includes a plurality of notification messages coming from different applications but belonging to a same category; and displaying, in a collapsed manner in response to an operation of collapsing a target display partition in the plurality of display partitions, notification messages that are of a plurality of different applications and that are included in the target display partition.

For example, the notification messages of the different categories may be a notification message of a live category, a notification message of a social communication category, a notification message of a service reminder category, and a notification message of a content information category. When pushing the notification messages to the electronic device, the applications may perform tag classification for the notification messages based on content of the notification messages.

For example, the electronic device may be a mobile phone, a tablet computer, a notebook computer, a desktop computer, a head mounted display device, or a vehicle-mounted device. A type of the electronic device is not limited in this application.

Based on this embodiment of this application, after receiving the plurality of notification messages of the different categories, the electronic device may display the notification messages in different display partitions based on the categories of the notification messages. After detecting the operation of collapsing the target display partition by a user, the electronic device may display, in a collapsed manner, the notification messages that are of the plurality of different applications and that are included in the target display partition.

In this way, when a large quantity of notification messages are displayed in the target display partition, the user may conveniently collapse the notification messages in batches, to make the display interface of the notification center more concise.

With reference to the first aspect, in an implementation of the first aspect, the electronic device collapses the notification messages that are of the plurality of different applications and that are included in the target display partition into one collapsed card for display, and the method further includes: in response to an operation of sliding on the collapsed card, displaying a deletion function button for deleting the collapsed card; and deleting the collapsed card in response to an operation of tapping the deletion function button.

In some other examples, when the electronic device detects an operation of touching and holding the collapsed card by the user, the electronic device may display the deletion function button for deleting the collapsed card; or when the electronic device detects that the user slides toward one side on the collapsed card, the electronic device may directly delete the collapsed card. This is not limited in this embodiment of this application.

Based on this embodiment of this application, the electronic device may collapse, based on the collapsing operation of the user, the notification messages that are of the plurality of different applications and that are included in the target display partition into one collapsed card for display. When detecting the operation of sliding on the collapsed card by the user, the electronic device may display the deletion function button for deleting the collapsed card. When detecting the operation of tapping the deletion function button by the user, the electronic device may delete the collapsed card. In this way, the user may delete all the notification messages in the target display partition in batches.

In some other examples, the electronic device may alternatively collapse the notification messages of the different applications into two or more collapsed cards based on time information. For example, one collapsed card displays notification messages in a preset time t, and one collapsed card displays notification messages before the preset time t.

With reference to the first aspect, in an implementation of the first aspect, the electronic device collapses the notification messages that are of the plurality of different applications and that are included in the target display partition into one collapsed card for display, and the method further includes: deleting the collapsed card in response to an operation of sliding on the collapsed card.

Based on this embodiment of this application, the user may conveniently delete all the notification messages in the target display partition in batches, to simplify the display interface of the notification center.

With reference to the first aspect, in an implementation of the first aspect, the target display partition further includes a collapsing function button, and displaying, in a collapsed manner in response to the operation of collapsing the target display partition in the plurality of display partitions, the notification messages that are of the plurality of different applications and that are included in the target display partition includes: in response to an operation of tapping the collapsing function button, displaying, in a collapsed manner, the notification messages that are of the plurality of different applications and that are included in the target display partition.

Based on this embodiment of this application, the user may conveniently display, in a collapsed manner, the notification messages of the plurality of different applications in the target display partition by tapping the collapsing function button.

According to the technical solution, a collapsing guide may be provided for the user, so that the user can more easily learn how to collapse the target display partition.

In some other examples, the operation of collapsing the target display partition may alternatively be an operation of sliding upward in the target display partition by the user.

With reference to the first aspect, in an implementation of the first aspect, the method further includes: displaying a second display interface in response to an operation of closing the notification center, where the second display interface is a display interface displayed by the electronic device before the first display interface; and displaying the first display interface in response to an operation of opening the notification center again, where the notification messages that are of the plurality of different applications and that are included in the target display partition in the first display interface are still displayed in a collapsed manner.

For example, the second display interface may be a display desktop or a display interface of an application. This is not limited in this embodiment of this application.

Based on this embodiment of this application, after the user returns from the notification center to the previously displayed second display interface, the electronic device may display the first display interface again in response to the operation of opening the notification center again by the user, and the collapsed target display partition in the first display interface is still in a collapsed state, so that the notification center of the electronic device can retain a use habit of the user, and the user does not perform a plurality of collapsing operations.

With reference to the first aspect, in an implementation of the first aspect, the method further includes: in response to an operation of expanding the target display partition by a user, displaying, in an expanded manner, the notification messages that are of the plurality of different applications and that are included in the target display partition.

For example, the operation of expanding the target display partition may be an operation of tapping the collapsing function button again by the user. For example, when the user taps the collapsing function button for the first time, the collapsing function button may become an expanding function button. When the user taps the collapsing function button again, the plurality of notification messages in the target display partition may be displayed in an expanded manner. Alternatively, the operation of expanding the target display partition may be an operation of sliding downward on the collapsed card corresponding to the target display partition by the user. This is not limited in this embodiment of this application.

Based on this embodiment of this application, when detecting the operation of expanding the target display partition by the user, the electronic device may display the notification messages of the plurality of different applications in the target display partition in an expanded manner. According to the technical solution, when the user wants to view a notification message, the user may find, by performing an operation of expanding a target display card, the notification message that the user wants to view.

With reference to the first aspect, in an implementation of the first aspect, when there are a plurality of notification messages of a same category that belong to a same application, displaying, in an expanded manner, the notification messages that are of the plurality of different applications and that are included in the target display partition includes: displaying, on a same target display card in a collapsed manner, the plurality of notification messages of the same category that belong to the same application.

Based on this embodiment of this application, when there are the plurality of notification messages of the same category that belong to the same application, when the electronic device expands the target display partition, the notification messages of the different applications are displayed in an expanded manner, but the plurality of notification messages of the same category that belong to the same application are displayed in a collapsed manner on the same target display card. Therefore, when there are a large quantity of notification messages, the user can view, as much as possible, notification messages sent by different applications.

In some other examples, the electronic device may alternatively display all the notification messages in an expanded manner. This is not limited in this embodiment of this application.

With reference to the first aspect, in an implementation of the first aspect, the method further includes: in response to an operation of expanding the target display card by the user, displaying, in an expanded manner, the plurality of notification messages of the same category that belong to the same application.

Based on this embodiment of this application, when detecting the operation of expanding the target display card by the user, the electronic device may display, in an expanded manner, the plurality of notification messages of the same category that belong to the same application, so that the user can view each notification message.

With reference to the first aspect, in an implementation of the first aspect, the displaying in a collapsed manner includes at least one of the following displaying:
displaying application icons of the plurality of different applications in an arranged manner; displaying display cards corresponding to the notification messages of the plurality of different applications in grids; or displaying display cards corresponding to the notification messages of the plurality of different applications in a stacked manner.

It should be understood that a specific form of the displaying in a collapsed manner is not limited in this embodiment of this application. For example, after the collapsing, the electronic device may further display an icon of an application and a partial text prompt.

Based on this embodiment of this application, after the notification messages are displayed in a collapsed manner, there may be a plurality of display manners, thereby improving display flexibility.

With reference to the first aspect, in an implementation of the first aspect, the first display interface further includes identifiers indicating titles of the plurality of display partitions.

For example, the identifiers may be title names; or the identifiers may be colors, and different display partitions have different identifier colors; or the identifiers may be shapes. This is not limited in this embodiment of this application.

Based on this embodiment of this application, the first display interface further includes the identifiers indicating the titles of the plurality of display partitions. Therefore, the user can distinguish between the display partitions more easily.

According to a second aspect, an electronic device is provided, including one or more processors and one or more memories. The one or more memories store one or more programs, and when the one or more programs are executed by the one or more processors, the display method according to any one of the first aspect and the possible implementations of the first aspect is performed.

According to a third aspect, a display apparatus is provided, including a module configured to implement the display method according to any one of the first aspect, the second aspect, and the possible implementations of the first aspect and the second aspect.

According to a fourth aspect, a chip is provided. The chip includes a processor and a communication interface, the communication interface is configured to receive a signal and transmit the signal to the processor, and the processor processes the signal, so that the display method according to any one of the first aspect and the possible implementations of the first aspect is performed.

According to a fifth aspect, a readable storage medium is provided. The readable storage medium stores instructions, and when the instructions are run on an electronic device, the display method according to any one of the first aspect and the possible implementations of the first aspect is performed.

According to a sixth aspect, a program product is provided. The program product includes program code, and when the program code is run on an electronic device, the display method according to any one of the first aspect and the possible implementations of the first aspect is performed.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3(a) and FIG. 3(b) are a diagram of a group of graphical user interfaces GUIs according to an embodiment of this application;
FIG. 4(a) to FIG. 4(e) are a diagram of another group of GUIs according to an embodiment of this application;
FIG. 5(a) to FIG. 5(g) are a diagram of another group of GUIs according to an embodiment of this application;
FIG. 6(a) to FIG. 6(d) are a diagram of another group of GUIs according to an embodiment of this application;
FIG. 7(a) to FIG. 7(c) are a diagram of another group of GUIs according to an embodiment of this application;
FIG. 8(a) and FIG. 8(b) are a diagram of another group of GUIs according to an embodiment of this application;
FIG. 9(a) and FIG. 9(b) are a diagram of another group of GUIs according to an embodiment of this application;
FIG. 10 is a diagram of another group of GUIs according to an embodiment of this application;
FIG. 11 is a schematic flowchart of determining a display partition of a notification message according to an embodiment of this application;
FIG. 12 is a schematic flowchart of determining a display partition of a notification message according to an embodiment of this application;
FIG. 13 is a schematic flowchart of a display method according to an embodiment of this application; and
FIG. 14 is a block diagram of an electronic device according to an embodiment of this application.

### DESCRIPTION OF EMBODIMENTS

The following describes technical solutions of embodiments in this application with reference to accompanying drawings.

A display method according to embodiments of this application may be applied to an electronic device such as a smartphone, a smart speaker, a smart television, a tablet computer, a notebook computer, a personal computer (personal computer, PC), an ultra-mobile personal computer (ultra-mobile personal computer, UMPC), a netbook, a vehicle-mounted device, a wearable device, a foldable device, or an internet of things (internet of things, IoT) device.

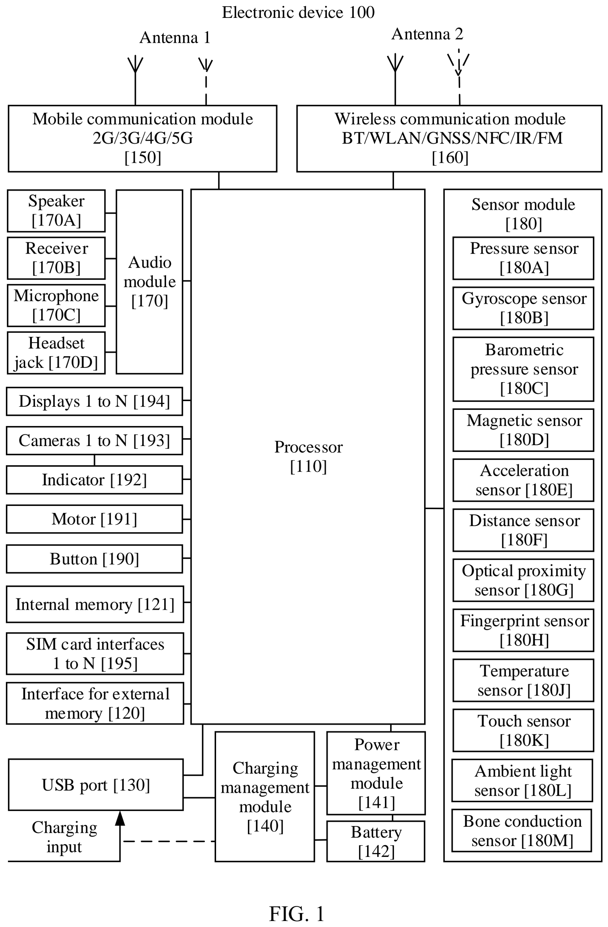

FIG. 1 is a diagram of a structure of an electronic device 100. The electronic device 100 may include a processor 110, an interface for external memory 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus interface, and/or the like.

The charging management module 140 is configured to receive charging input from a charger.

The power management module 141 is configured to connect to the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes 2G/3G/4G/5G or the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. The camera 193 is configured to capture a static image or a video.

The digital signal processor is configured to process a digital signal, and may process another digital signal in addition to the digital image signal.

The video codec is configured to compress or decompress a digital video. The electronic device 100 may support one or more video codecs.

The interface for external memory 120 may be used to connect to an external storage card, for example, a micro SD card, to extend a storage capability of the electronic device 100.

The internal memory 121 may be configured to store computer-executable program code. The executable program code includes instructions. The processor 110 runs the instructions stored in the internal memory 121, to perform various function applications of the electronic device 100 and data processing.

The electronic device 100 may implement an audio function such as music play or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal.

The speaker 170A, also referred to as a "loudspeaker", is configured to convert an audio electrical signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a moving posture of the electronic device 100.

The barometric pressure sensor 180C is configured to measure barometric pressure. In some embodiments, the electronic device 100 calculates an altitude through the barometric pressure measured by the barometric pressure sensor 180C, to assist in positioning and navigation.

The acceleration sensor 180E may detect magnitudes of accelerations of the electronic device 100 in various directions (usually on three axes).

The distance sensor 180F is configured to measure a distance.

The fingerprint sensor 180H is configured to collect a fingerprint.

The touch sensor 180K is also referred to as a "touch panel". The touch sensor 180K may be disposed on the display 194, and the touch sensor 180K and the display 194 form a touchscreen, which is also referred to as a "touch screen".

The bone conduction sensor 180M may obtain a vibration signal.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. In embodiments of this application, an operating system with a hierarchical architecture is used as an example to describe a software structure of the electronic device 100.

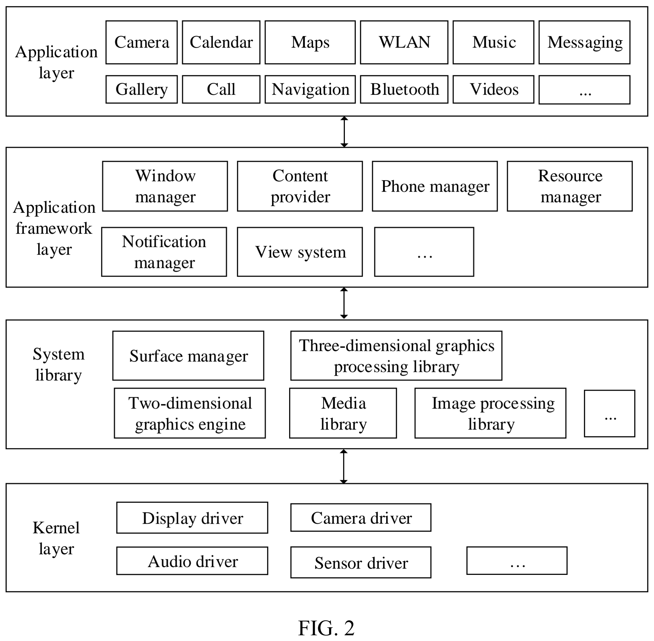

FIG. 2 is a block diagram of the software structure of the electronic device 100 according to an embodiment of this application. In a layered architecture, software is divided into several layers, and each layer has a clear role and task. The layers communicate with each other through a software interface. In some embodiments, the operating system is divided into four layers: an application layer, an application framework layer, a system library, and a kernel layer from top to bottom. The application layer may include a series of application packages.

As shown in FIG. 2, the application packages may include applications such as Camera, Gallery, Calendar, Call, Maps, Navigation, WLAN, Bluetooth, Music, Videos, Messaging, and Wallet.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a messaging notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction.

A core library includes two parts: a function to be invoked by a Java language, and a core library.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In a process of using an electronic device, a user often views a notification center to obtain some notification messages. The notification center of the electronic device generally arranges the messages in a time sequence of receiving the notification messages. However, when there are a large quantity of notification messages, some important messages may be missed by the user. In addition, excessive notification messages may cause trouble to the user.

In view of this, embodiments of this application provide a display method and an electronic device. According to the technical solutions, notification messages of different categories may be displayed in different display partitions based on categories of notification messages, to avoid a user from missing an important notification. In addition, the electronic device may further implement batch management of a plurality of notification messages based on an operation of the user, to improve user experience.

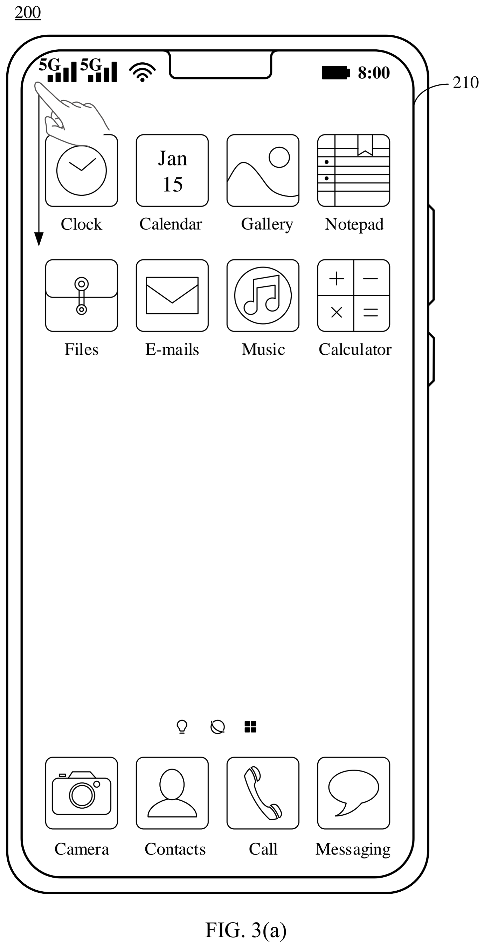

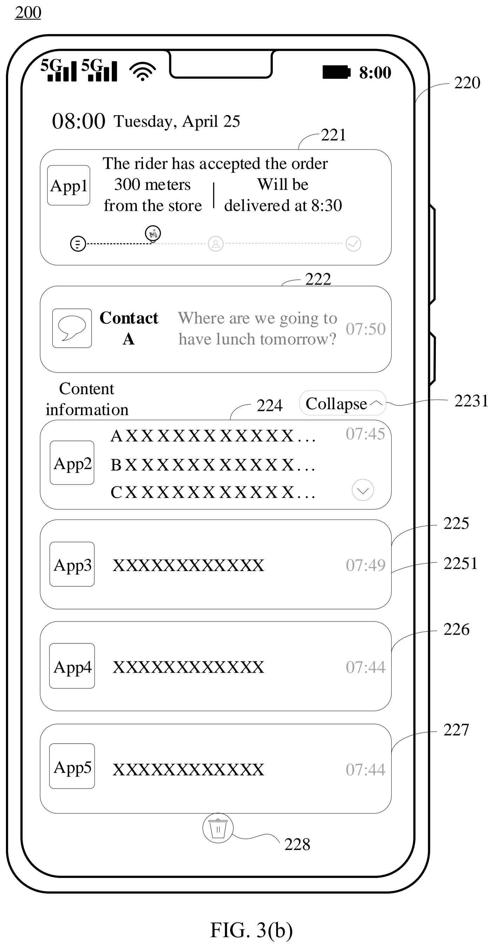

The following describes the technical solutions in embodiments of this application with reference to FIG. 3(a) and FIG. 3(b) to FIG. 13.

FIG. 3(a) and FIG. 3(b) are a diagram of a group of graphical user interfaces (graphical user interface, GUI) according to an embodiment of this application. FIG. 3(a) and FIG. 3(b) show a process in which an electronic device 200 displays notification messages.

Refer to FIG. 3(a). The GUI may be a display interface 210 of the electronic device 200. The display interface 210 may include a plurality of applications (application, App) in the electronic device 200.

When detecting an operation of opening a notification center by a user, the electronic device 200 may display a GUI shown in FIG. 3(b).

For example, still refer to FIG. 3(a). The operation of opening the notification center by the user may be an operation of sliding downward at a position on the left side of a status bar of the electronic device 200 by the user.

Alternatively, the operation of opening the notification center by the user may be an operation of sliding rightward in a display interface of a control center by the user.

Alternatively, the operation of opening the notification center by the user may be an operation of "opening the notification center" input by the user through voice.

For example, refer to FIG. 3(b). The GUI is a display interface 220 of the notification center of the electronic device 200. The display interface 220 may include a plurality of display partitions. For example, the display interface 220 may include a display card 221 of app1, a display card 222 of messaging, and display cards of a plurality of apps included in content information. Content information may include a display card 224 of app2, a display card 225 of app3, a display card 226 of app4, and a display card 227 of app5. The display interface 220 may further include a collapsing function button 2231 for collapsing content information and a deletion function button 228.

The display card 221 may be a display card corresponding to a live notification message. For example, app1 is a takeout app, and the display card 221 may be used to display a real-time status of a takeout order placed by the user. In this case, the user can obtain the status of the order in real time. It should be understood that, for the live notification message, the display card corresponding to the live notification message may be displayed at the top of the notification center, so that the user can more easily view the message.

It may be understood that the live notification message may alternatively be a notification message of a travel app such as a taxi ride or a ride, a real-time notification message of a ball game, or the like.

It may be understood that, in this embodiment of this application, content information is used as an example for description of titles of the display partitions in which the display card 224 to the display card 227 are located. In some other examples, the titles may alternatively have other names. For example, the titles of the display partitions may alternatively be "Content notification", "Push content", and "Marketing information".

The display card 222 may be a notification message of a social communication category. For example, the display card 222 may be a display card of messaging; or the display card 222 may be a notification message of WeChat^{®}.

In some other examples, when there are a plurality of notification messages of the social communication category of different applications, the plurality of notification messages of the social communication category may alternatively be displayed in a collapsed manner.

In some other examples, a notification message of a service reminder category may alternatively be included above or below the notification message of the social communication category. For example, the notification message of the service reminder category may include an account balance change and a schedule reminder.

It may be understood that, in this embodiment of this application, if there is no live notification message, that is, the display card 221 does not exist, the display card 222 may be displayed at the top of the notification center.

In some examples, display cards in the display cards of the plurality of apps may include an icon of an app, a title name of information, a push time, and the like. For example, the display card 225 may include an icon of app2, a title name of information "XXXXXXXXXXXX", and a push time "07:49".

It should be understood that content displayed on the display card of the app is merely an example. In some other examples, the content included in the display card may alternatively be displayed in another layout form based on a specific situation.

After detecting an operation of tapping the deletion function button 228 by the user, the electronic device 200 may delete all or some notification messages of the notification center.

Based on this embodiment of this application, the electronic device may display notification messages of different categories in different display partitions of the notification center based on notification messages. For example, the live notification message is displayed at the top of the notification center, the notification message of the social communication category and the notification message of the service reminder category may be displayed in the middle of the notification center, and the notification message of the content information category is displayed at the bottom of the display interface of the notification center, so that the important live notification message can be browsed by the user in time, and the user does not miss the important message.

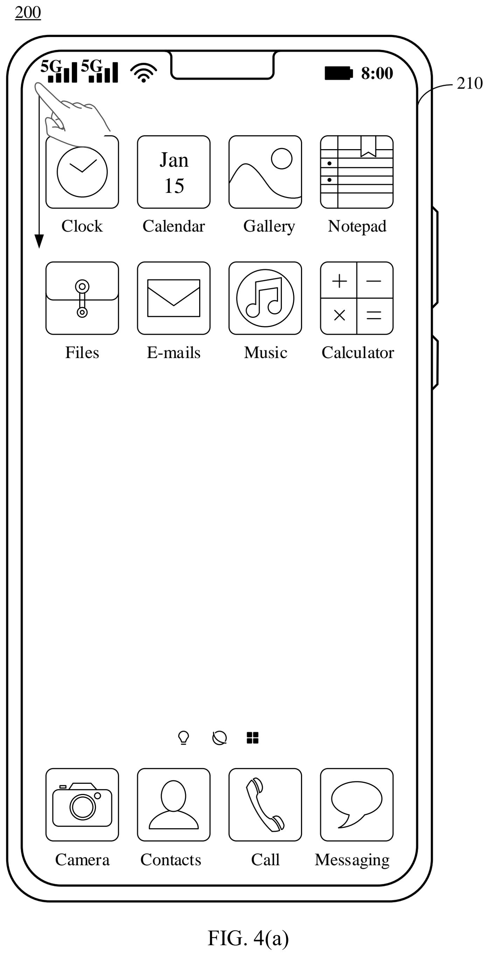

FIG. 4(a) to FIG. 4(e) are a diagram of another group of GUIs according to an embodiment of this application. FIG. 4(a) to FIG. 4(e) show a process in which the electronic device 200 displays notification messages and a user processes the notification messages in batches.

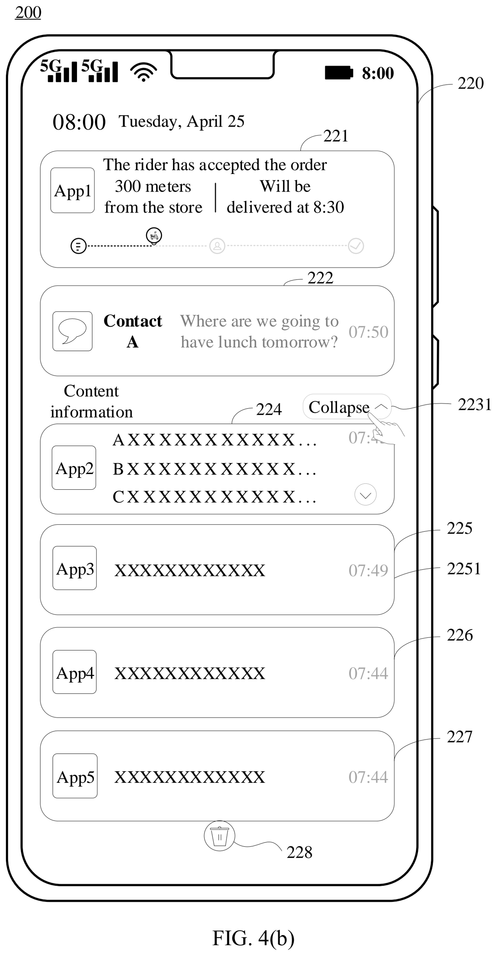

It should be understood that, for FIG. 4(a) and FIG. 4(b), refer to the related descriptions of FIG. 3(a) and FIG. 3(b). For brevity, details are not described again.

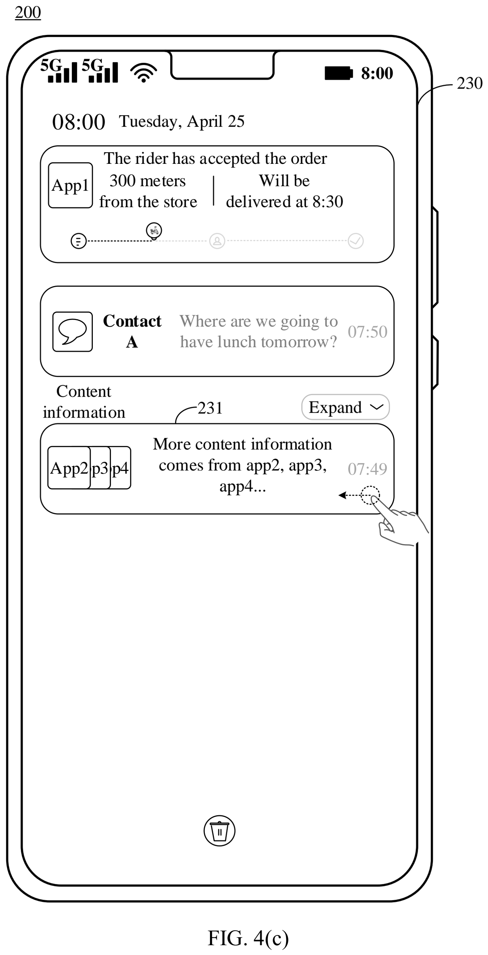

After detecting an operation of tapping the collapsing/expanding function button 2231 by the user, the electronic device 200 may display a GUI shown in FIG. 4(c).

Refer to FIG. 4(c). The GUI is a display interface 230 of the electronic device 200. In the display interface 230, display cards of notification messages of applications in content information is collapsed into one display card 231. The display card 231 may include icons of a plurality of collapsed apps, text content "More content information comes from app2, app3, app4, ...", and the like. In this way, the plurality of display cards in content information can be collapsed by one click, so that the user can manage the plurality of display cards conveniently.

It should be understood that the display card 231 may also be referred to as a collapsed card, and the display card 231 may alternatively be displayed in another layout form. This is not limited in this embodiment of this application.

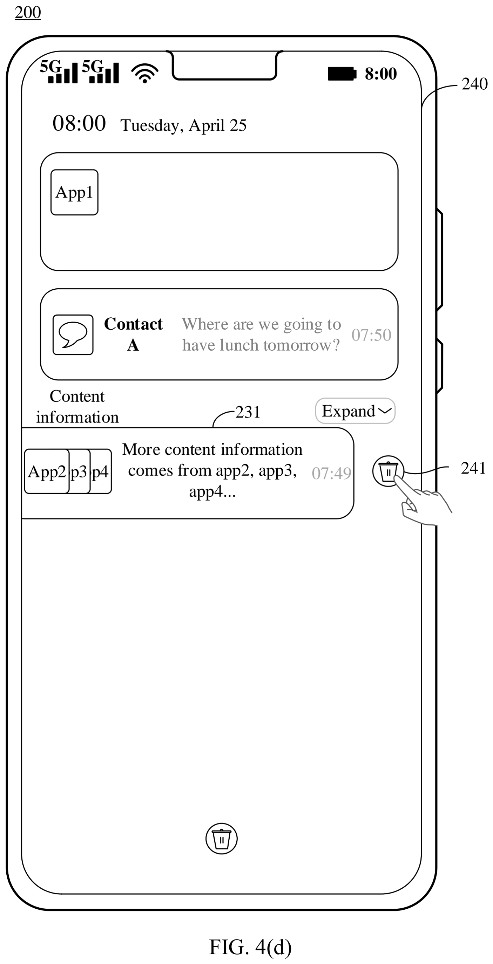

After the electronic device 200 detects an operation of sliding toward one side on the display card 231 by the user, the display card 231 may slide along with a finger of the user. For example, a GUI shown in FIG. 4(d) may be displayed.

Refer to FIG. 4(d). The GUI is a display interface 240 of the electronic device 200. In the display interface 240, a deletion function button 241 may be displayed on one side of the display card 231.

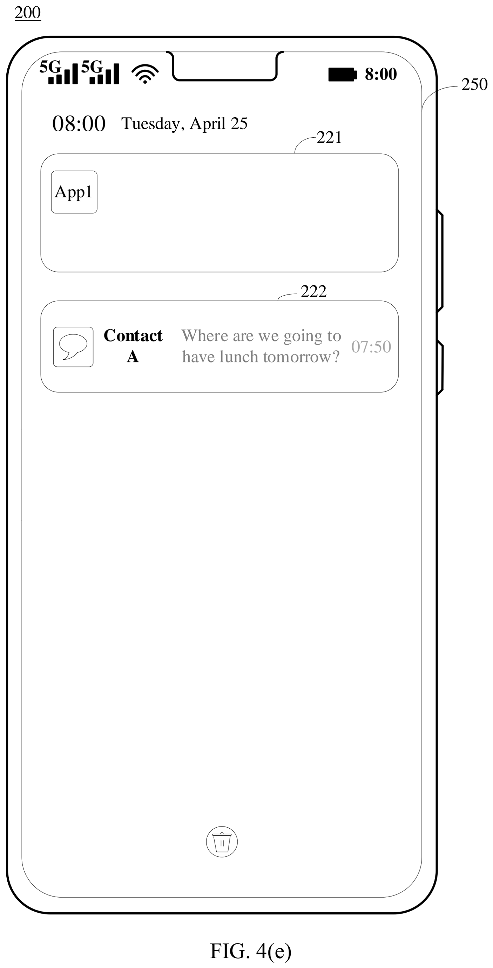

After detecting an operation of tapping the deletion function button 241 by the user, the electronic device 200 may display a GUI shown in FIG. 4(e), to implement one-click deletion of notification messages of the plurality of apps.

Refer to FIG. 4(e). The GUI is a display interface 250 of the electronic device 200. The display interface 250 includes the display card 221 of app1 and the display card 222 of messaging.

It may be understood that a plurality of messages in another display partition may also be collapsed and deleted in batches in the foregoing manner. This is not limited in this embodiment of this application.

Based on this embodiment of this application, the electronic device may display notification messages of different categories in different display partitions of the notification center based on notification messages, so that the important live notification message can be browsed by the user in time, and the user does not miss the important message. In addition, for notification messages of the content information category, batch processing such as one-click collapsing and one-click deletion that facilitates user operations may be implemented, which can improve user experience.

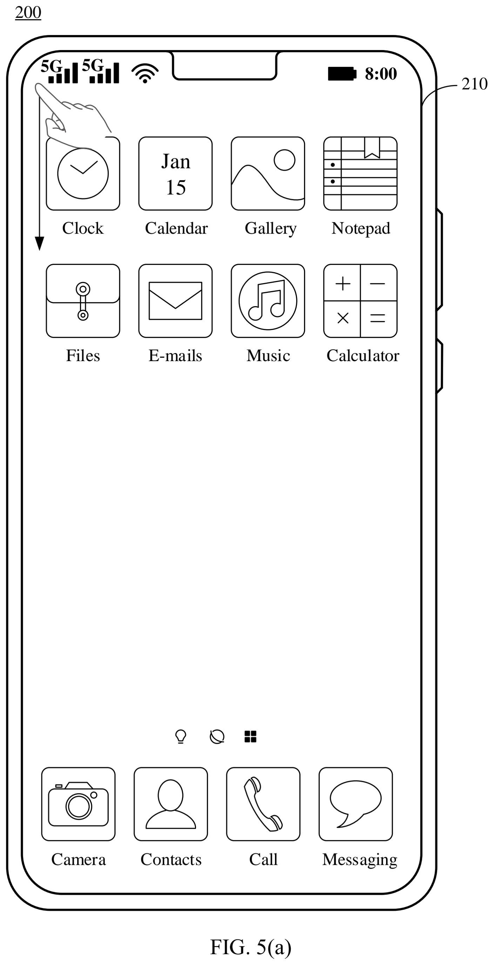

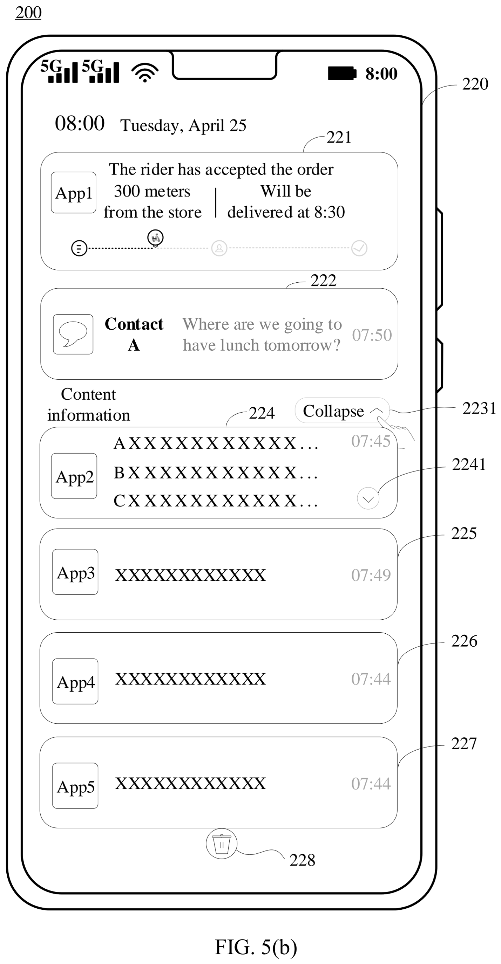

FIG. 5(a) to FIG. 5(g) are a diagram of another group of GUIs according to an embodiment of this application. FIG. 5(a) to FIG. 5(g) show a process in which the electronic device 200 displays notification messages, and collapses and expands display cards of the notification messages based on an operation of a user.

For FIG. 5(a) to FIG. 5(c), refer to the related descriptions of FIG. 4(a) to FIG. 4(c). For brevity, details are not described again.

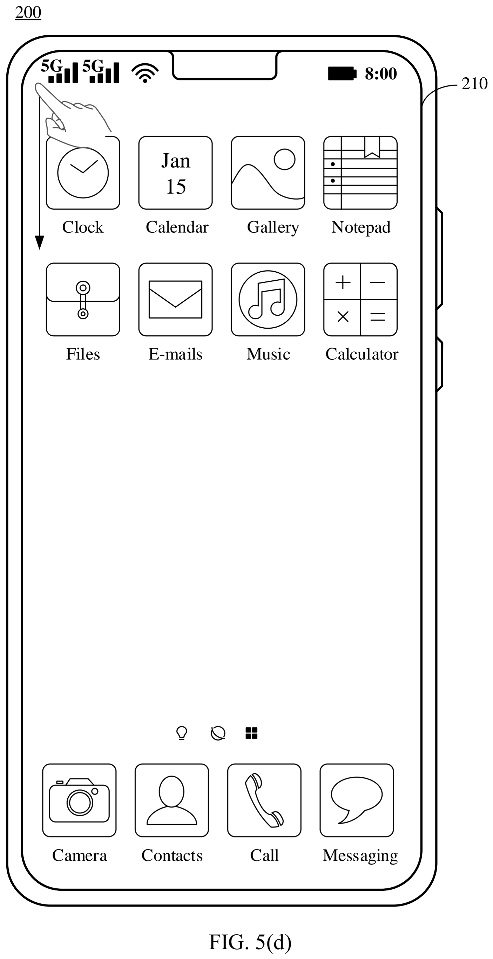

After detecting an operation of sliding upward on the display interface 230 by the user, the electronic device 200 may display a GUI shown in FIG. 5(d).

Refer to FIG. 5(d). The GUI is a display interface 210 of the electronic device 200.

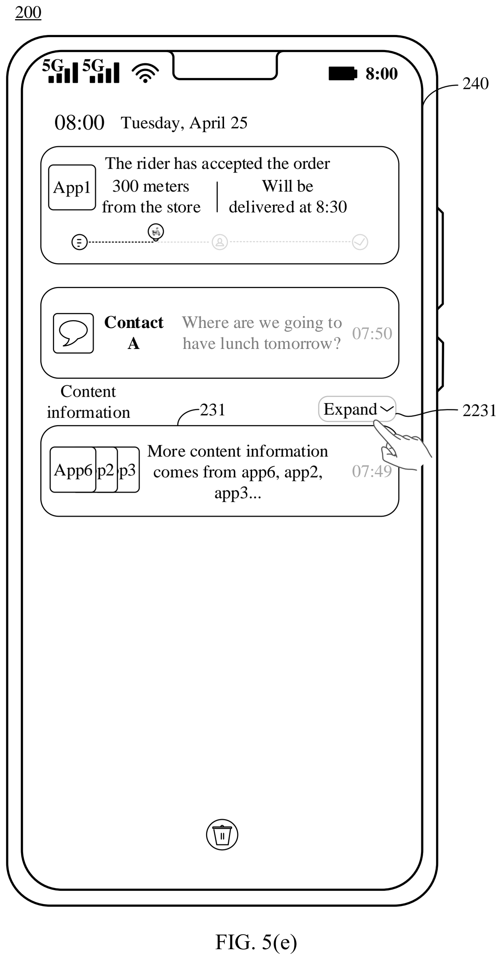

When receiving a notification message pushed by app6, and detecting an operation of opening the notification center again by the user, the electronic device may display a GUI shown in FIG. 5(e).

Refer to FIG. 5(e). The GUI is a display interface 240 of the electronic device 200. The display card 231 in the display interface 240 includes icons of app6, app2, and app3 and text content "More content information comes from app6, app2, app3, ...".

In this way, when the electronic device returns to a display desktop from the notification center, and then switches from the display desktop to the notification center, the notification center may keep content information in an original collapsed display state, so that a use habit of the user can be retained.

In addition, before the electronic device switches from the display desktop to the notification center again, if there is a content information notification message pushed by a new application, an icon of the application from which the notification message comes is also displayed on the collapsed display card, so that the user can view the new notification message while retaining the use habit of the user.

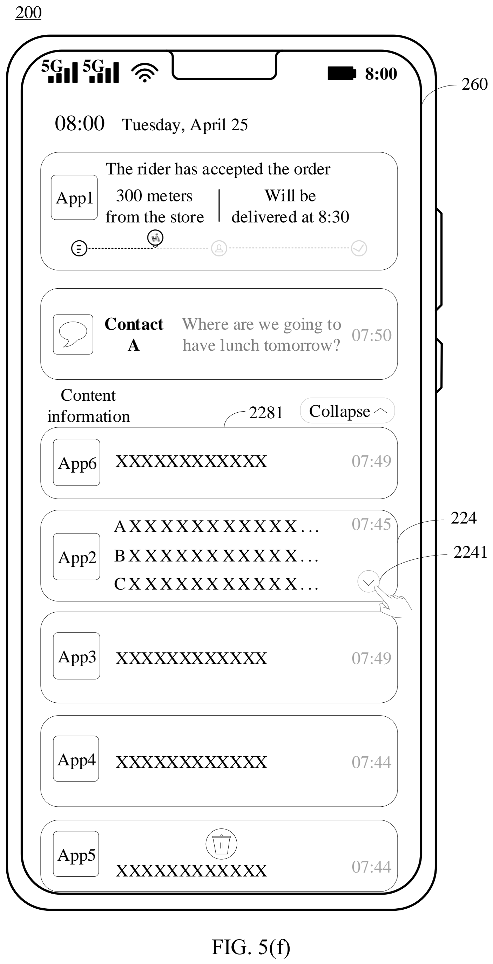

After detecting an operation of tapping the function button 2231 by the user, the electronic device 200 may display a GUI shown in FIG. 5(f). Alternatively, after detecting an operation of tapping the display card 231 by the user, the electronic device 200 may display a GUI shown in FIG. 5(f). Alternatively, when detecting an operation of sliding downward on the display card 231 by the user, the electronic device may display a GUI shown in FIG. 5(f).

Refer to FIG. 5(f). The GUI is a display interface 260 of the electronic device 200. Compared with the display interface 220, in the display interface 260, a display card 2281 of the notification message of app6 is displayed at the top of content information, to facilitate viewing by the user.

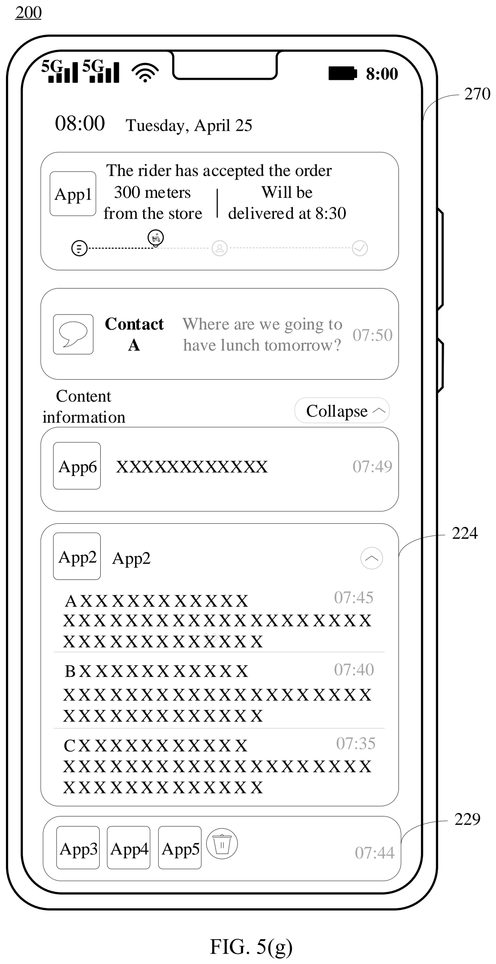

After detecting an operation of tapping the function button 2241 on the display card 224 by the user, the electronic device may display a GUI shown in FIG. 5(g).

Refer to FIG. 5(g). The GUI is a display interface 270 of the electronic device 200. In the display interface 270, the display card 224 on which a plurality of notification messages are originally collapsed changes to an expanded state, and the display card 224 in an expanded state includes titles, brief descriptions, and push times of the plurality of notification messages. The display interface 260 further includes a display card 229, and the display card 229 may include an icon of app3, an icon of app4, and an icon of app5 that are not completely displayed in the display interface of the notification center.

In this way, the user may conveniently collapse the plurality of notification messages, and conveniently view the plurality of notification messages by tapping the function button when needed.

In some cases, for the display card 231 formed by collapsing the plurality of display cards in the display partition of content information by the user by tapping the collapsing/expanding function button, the electronic device may display the display card 231 in a plurality of forms.

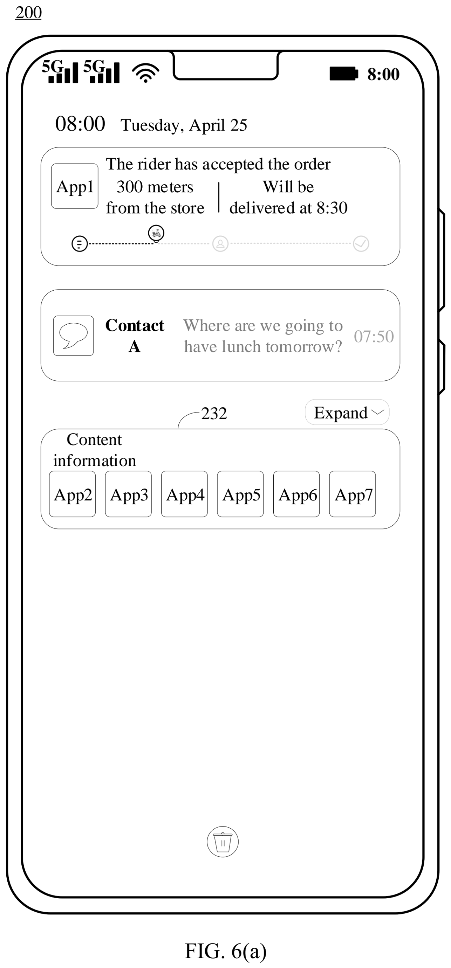

For example, FIG. 6(a) to FIG. 6(d) are a diagram of another group of GUIs according to an embodiment of this application. FIG. 6(a) to FIG. 6(d) show a plurality of display forms of a collapsed display card.

As shown in FIG. 6(a), a display card 232 may be another display form of the display card 231. Compared with the display card 231, the display card 232 may include only an icon of an application that pushes a notification message. For example, the display card 232 includes icons of applications of app2 to app7. The display card 232 may further include text content "Content information".

In some other examples, the text content "Content information" may not be included in the display card 232.

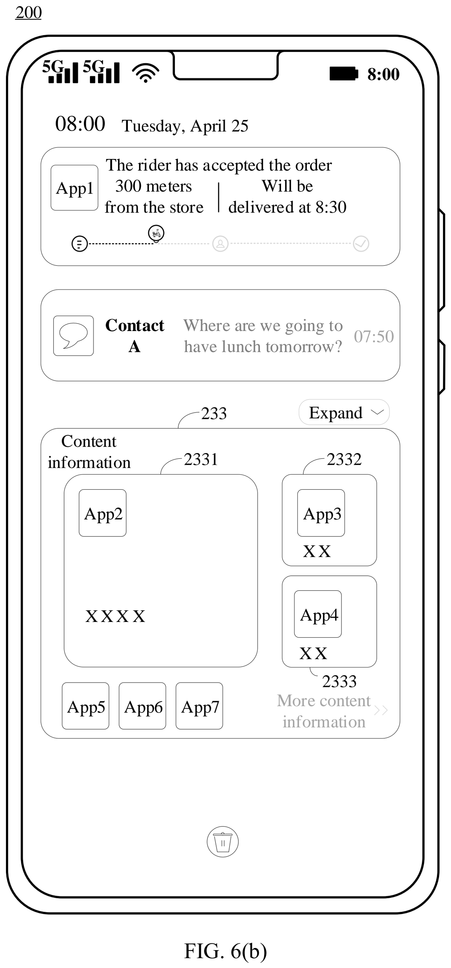

As shown in FIG. 6(b), a display card 233 may be another display form of the display card 231. Compared with the display card 231, the display card 233 may further include a display card 2331 of app2, a display card 2332 of app3, a display card 2333 of app4, and icons of applications of app5 to app7. The display card 233 may further include text content "Content information".

In some other examples, the text content "Content information" may not be included in the display card 233.

It should be understood that sizes and shapes of the display card 2331, the display card 2332, and the display card 2333 may be different or may be the same. This is not limited in this embodiment of this application.

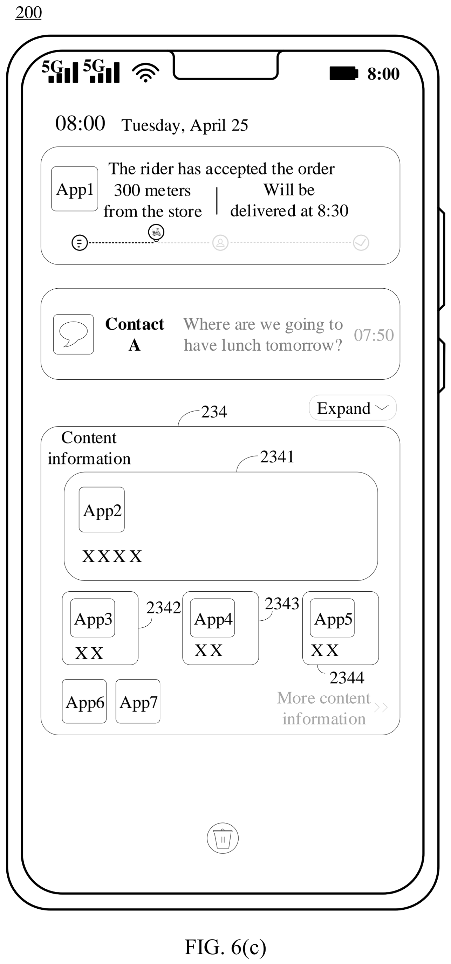

As shown in FIG. 6(c), a display card 234 may be another display form of the display card 231. Compared with the display card 231, the display card 234 may further include a display card 2341 of app2, a display card 2342 of app3, a display card 2343 of app4, a display card 2344 of app5, and icons of applications of app6 and app7. The display card 234 may further include text content "Content information".

In some other examples, the text content "Content information" may not be included in the display card 234.

It should be understood that sizes and shapes of the display card 2341, the display card 2342, the display card 2343, and the display card 2343 may be different or may be the same. This is not limited in this embodiment of this application.

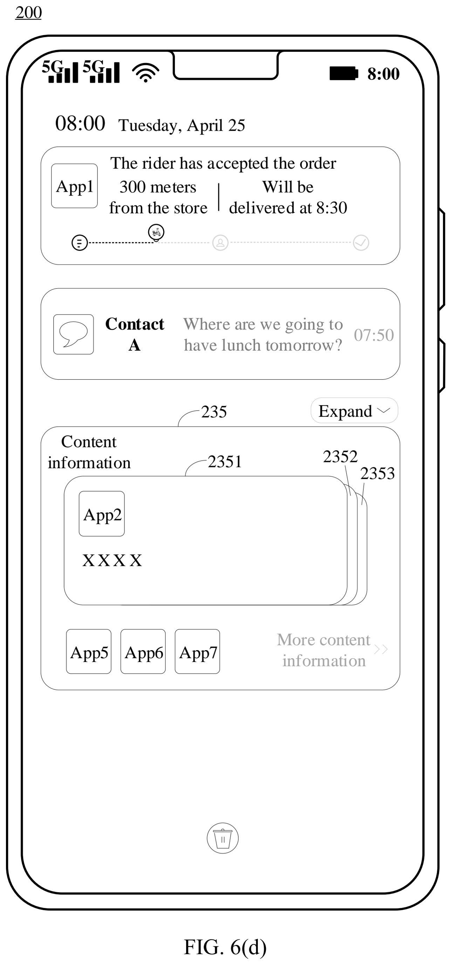

As shown in FIG. 6(d), a display card 235 may be another display form of the display card 231. Compared with the display card 231, the display card 235 may further include a plurality of stacked display cards: a display card 2351, a display card 2352, and a display card 2353, and icons of applications of app5 to app7. The display card 235 may further include text content "Content information".

In some other examples, the text content "Content information" may not be included in the display card 235.

In some other examples, the display cards of app2 to app7 may be displayed in a stacked manner based on a push time. This is not limited in this embodiment of this application.

In this embodiment of this application, background images of the display cards included in the display card 232, the display card 233, the display card 234, and the display card 235 may be pushed based on a use habit of a user, or may be randomly displayed.

It should be understood that a specific representation form of the collapsed display card 231 may be randomly displayed each time the user opens a notification center, or may be displayed based on a use frequency of the user.

In some other examples, a live notification message, a social communication message, or a service reminder message may be displayed in one of the foregoing forms. This is not limited in this embodiment of this application.

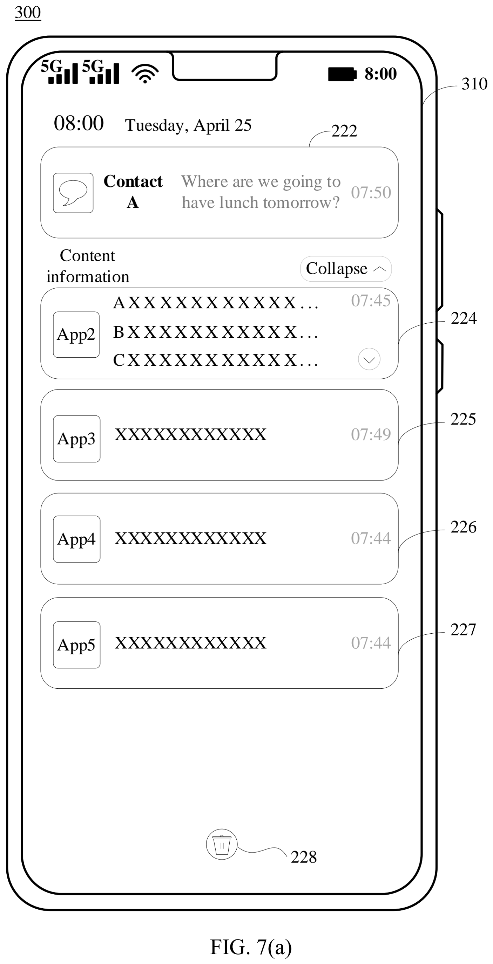

In some cases, the notification message may not include a live notification message, or may not include a notification message of a social communication category. The following describes a display solution of the notification center with reference to FIG. 7(a) to FIG. 7(c).

FIG. 7(a) to FIG. 7(c) are a diagram of another group of GUIs according to an embodiment of this application.

Refer to FIG. 7(a). The GUI is a display interface 310 of a notification center of an electronic device 300. The notification center does not include a live notification message, that is, the display interface 310 does not include a display card of the live notification. The display interface 310 may have two display partitions: a display partition 1 in which the display card 222 of messaging is located and a display partition 2 in which display cards of a plurality of apps included in content information is located. The display partition 2 may include a display card 224 of app2, a display card 225 of app3, a display card 226 of app4, and a display card 227 of app5. The display interface 310 may further include the deletion function button 228.

It may be understood that, when there is no live notification message, a display card of a message of a social communication category or a message of a service reminder category may be displayed at the top of the display interface of the notification center, and a display card of a content information notification message is displayed below the display card of the message of the social communication category or the message of the service reminder category.

When there is a live notification message and a content information notification message, but there is no message of a social communication category or a service reminder category, a display card of content information may be displayed below a display card of the live notification message.

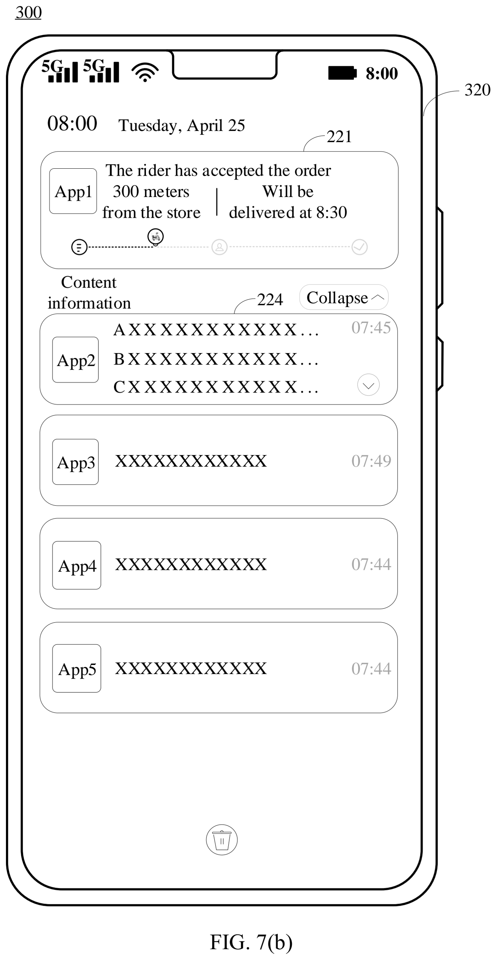

For example, refer to FIG. 7(b). The GUI is a display interface 320 of the notification center of the electronic device 300. The display interface 320 may include a display partition 1 of the live notification message and a display partition 2 of content information. The display partition 1 may include the display card 221 of app1. For the display partition 2, refer to the related descriptions of (a) in 7. For brevity, details are not described again.

In some cases, only some content information notification messages may exist in the notification center. In this case, the electronic device may display display cards of the content information notification messages at the top of the display interface of the notification center in a chronological order.

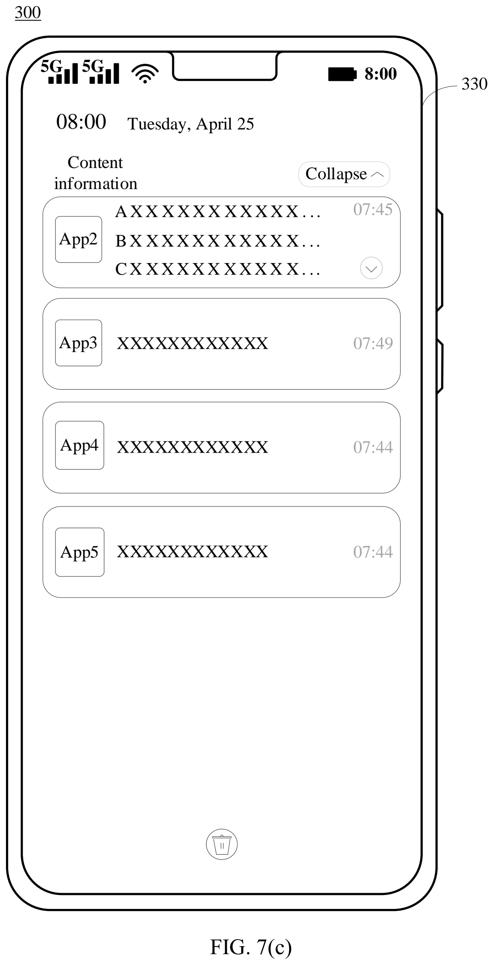

For example, refer to FIG. 7(c). The GUI is a display interface 330 of the notification center of the electronic device 300. The display interface 330 includes only a plurality of display cards of the content information notification message. For details, refer to the related descriptions in FIG. 7(a).

In some cases, to enable a user to better distinguish between display partitions, the notification center may further display sub-titles of the plurality of display partitions.

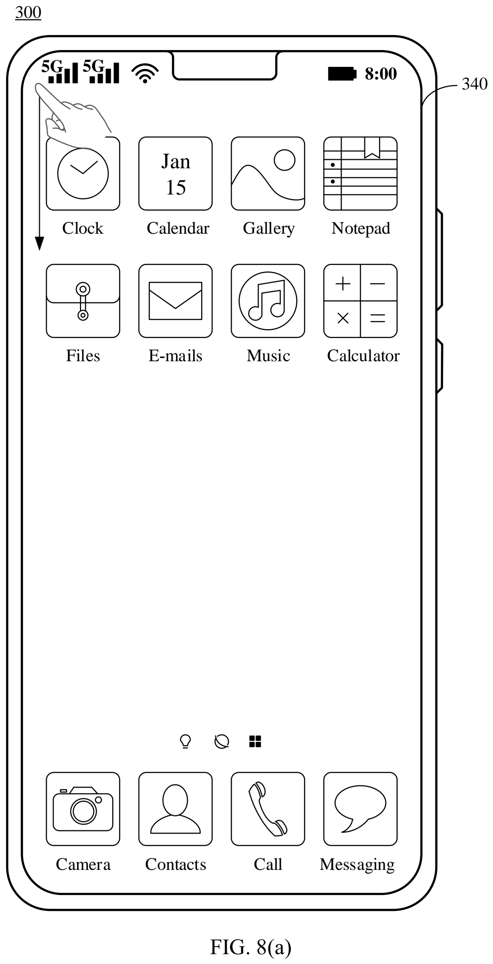

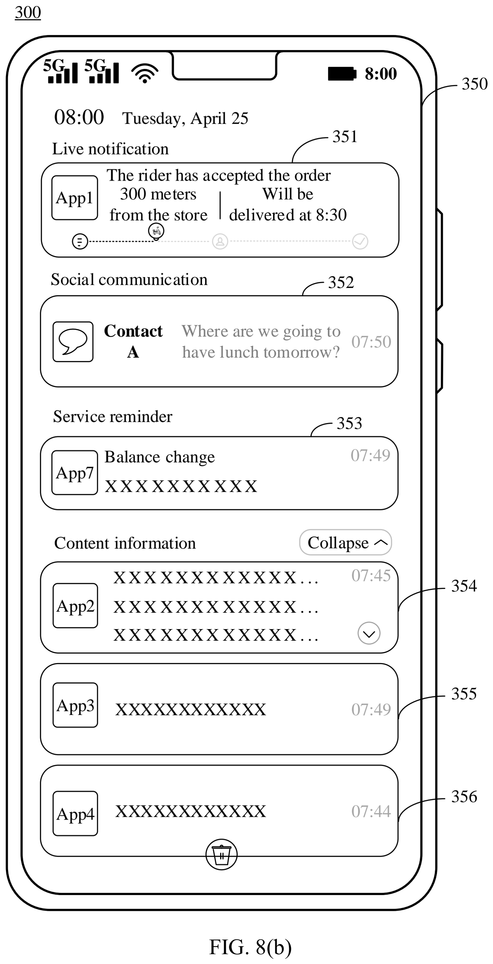

For example, FIG. 8(a) and FIG. 8(b) are a diagram of another group of GUIs according to an embodiment of this application.

For FIG. 8(a), refer to the related descriptions of FIG. 3(a).

After detecting an operation of opening a notification center by a user, the electronic device 300 may display a GUI shown in FIG. 8(b).

Refer to FIG. 8(b). The GUI is a display interface 350 of the notification center of the electronic device 300. The display interface 350 may include a plurality of display partitions, and sub-titles of the plurality of display partitions are respectively live notification, social communication, service reminder, and content information.

Live notification may include a display card 351 of app1, social communication may include a display card 352 of messaging, service reminder may include a display card 353 of app7, and content information may include a display card 354 of app2, a display card 355 of app3, and a display card 356 of app4.

In some cases, the electronic device may receive a plurality of notification messages from a same source. In this case, the electronic device generally places the notification messages from the same source in a same group. Consequently, important notification messages may be collapsed in the group, and the user easily misses the important notifications.

In this embodiment of this application, after receiving the plurality of notification messages from the same source, the electronic device first determines categories of the notification messages. When the categories of the plurality of notification messages are different, the electronic device displays the plurality of notification messages in different display partitions, to prevent the user from missing an important notification message.

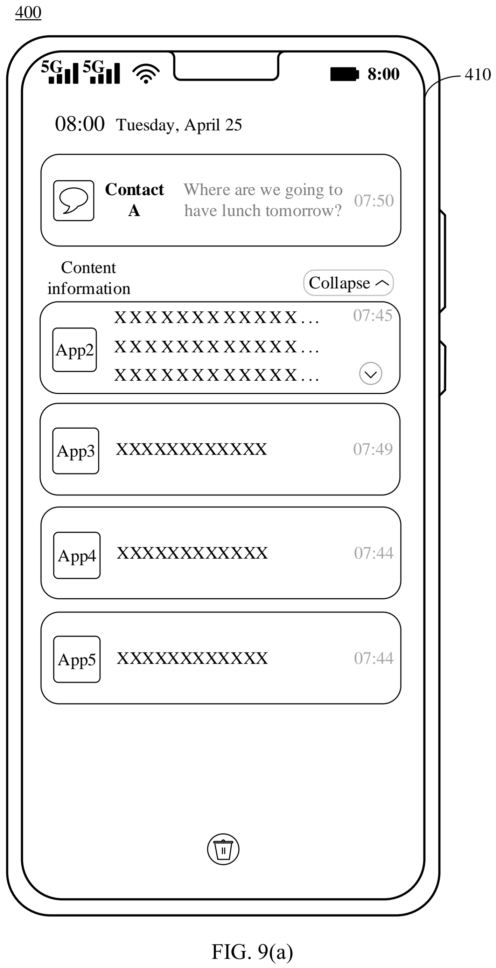

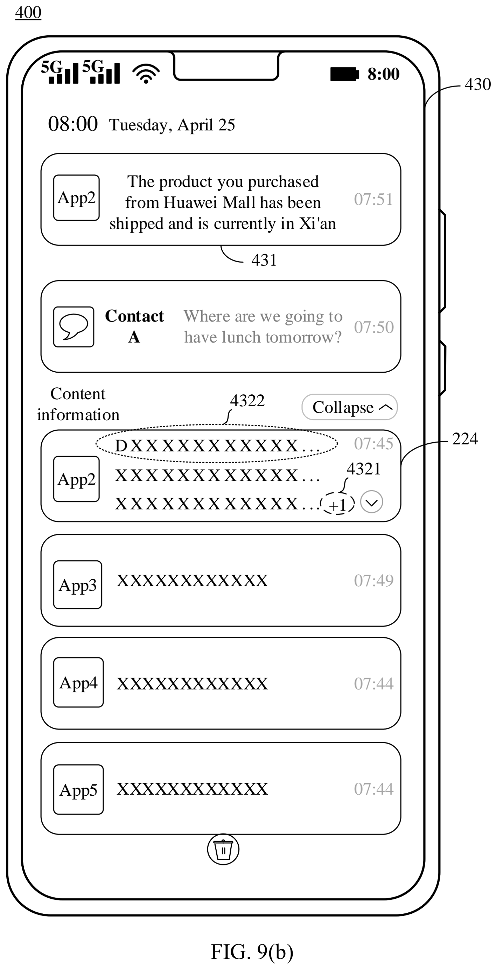

FIG. 9(a) and FIG. 9(b) are a diagram of another group of GUIs according to an embodiment of this application. FIG. 9(a) and FIG. 9(b) show a process in which an electronic device 400 displays, after receiving notification messages from a same source, the notification messages in different partitions based on categories of the notification messages.

It should be understood that, for FIG. 9(a), refer to the related descriptions of FIG. 7(a).

For example, when the electronic device 400 receives a notification message A and a notification message B pushed by app2, if the electronic device 400 determines, based on categories of the notification message A and the notification message B, that the notification message A belongs to a content information category and the notification message B belongs to a service reminder category, the electronic device 400 may display a GUI shown in FIG. 9(b).

Refer to FIG. 9(b). The GUI is a display interface 430 of a notification center of the electronic device 400. Compared with a display interface 410, in the display interface 430, a display card 431 of the notification message A is newly added, and a new notification message 4322 appears at the top of the display card 224 of app2, to remind a user that there is new content information pushed by app2. The display card 224 may further include a collapsing identifier 4321 of another notification message, to remind the user that there is still a notification message that is collapsed and not displayed.

It should be understood that, when determining that the category of the notification message A is the service reminder category, the electronic device 400 may display the notification message A in a display partition in which a notification message of a service reminder category is located, and further determine whether a target display card of app2 exists in the display partition in which the notification message of the service reminder category is located. If the target display card exists, the notification message may be displayed in a collapsed manner in the target display card. If the target display card does not exist, a display card corresponding to the notification message A is independently displayed.

In this embodiment of this application, if the target display card of app2 does not exist in the display partition of service reminder, the electronic device 400 may independently display the display card 431 of the notification message A in the display partition of service reminder.

Similarly, if the display card 224 of app2 exists in a display partition of content information, the electronic device 400 may display the notification message B on the display card 224 in a collapsed manner.

It may be understood that the electronic device may display, by using the foregoing logic, each notification message received by the electronic device 400.

Based on this embodiment of this application, for the plurality of notification messages from the same source, the electronic device determines, based on the categories of the notification messages, the display partitions in which the notification messages are displayed, so that the user can be prevented from missing an important notification message.

In some cases, when the electronic device is a display device having a large screen, such as a tablet or a smart television, the notification messages may be displayed in columns based on categories.

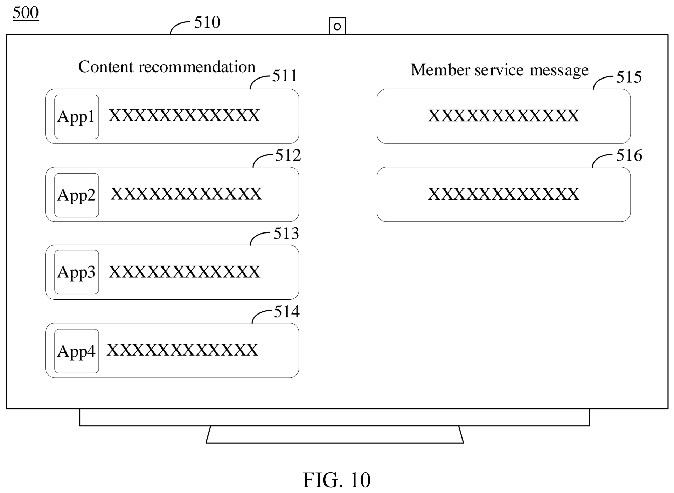

For example, FIG. 10 is a diagram of another GUI according to an embodiment of this application. Refer to FIG. 10. The GUI is a display interface 510 of a notification center of an electronic device 500.

In some examples, the display interface 510 may display display cards of notification messages in columns. For example, when there are two categories of notification messages: a content recommendation message and a member service message, a display card included in a display partition in which the content recommendation message is located may be displayed in a column, and a display card included in a display partition in which the member service message is located may be displayed in a column.

The display partition in which the content recommendation message is located may include a display card 511, a display card 512, a display card 513, and a display card 514. Each display card may include an icon and a content introduction of an app, so that a user can simply understand content of the app.

The display partition in which the member service message is located may include a display card 515 and a display card 516. For example, the display card 515 may be a display card corresponding to a membership renewal message, and the display card 516 may be a display card corresponding to a movie coupon message.

It may be understood that the foregoing description is provided by using an example in which the display interface 510 includes the content recommendation message and the member service message. In some other examples, the display interface 510 may include notification messages of other categories or the like, or the display interface 510 may display notification messages in three or more columns.

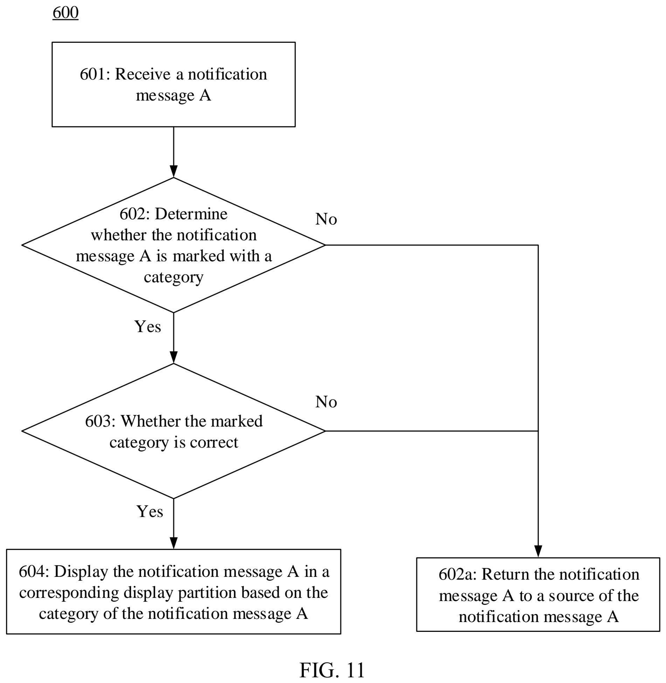

FIG. 11 is a schematic flowchart of determining a display partition of a notification message according to an embodiment of this application. As shown in FIG. 11, the method 600 may be applied to an electronic device, and the method 600 may include step 601 to step 604.

601: The electronic device receives a notification message A.

For example, a source of the notification message A may be an application or a meta service. For example, the electronic device receives the notification message A pushed by app1.

602: The electronic device determines whether the notification message A is marked with a category.

After receiving the notification message A, the electronic device may check whether the notification message A is marked with the category.

It may be understood that, when pushing a notification message to the electronic device, an application may mark a category of the notification message according to a specific rule. For example, the category to which the notification message belongs is determined based on content of the pushed notification message.

When it is determined that the notification message A is not marked with the category, step 602a may be performed.

602a: The electronic device returns the notification message A to the source of the notification message A.

In some other examples, when returning the notification message A to the source of the notification message A, the electronic device may indicate that the source needs to mark the category of the notification message A.

It may be understood that, in some other implementations, when the electronic device determines that the notification message A is not marked with the category, the electronic device may mark the notification message A with the category based on content of the notification message A. For example, the electronic device may determine the content of the notification message A by using a semantic identification technology or an image recognition technology, and determine the category of the notification message.

603: When determining that the notification message A is marked with the category, the electronic device determines whether the marked category is correct.

For example, the electronic device may obtain the content such as a text and an image in the notification message A, to determine whether the marked category is correct.

When determining that the marked category is incorrect, the electronic device performs step 602a.

604: The electronic device displays the notification message A in a corresponding display partition based on the category of the notification message A.

The electronic device may display notification messages of different categories in different display partitions.

In an example, when the electronic device determines that the notification message A belongs to a first category, for example, the first category may be a live notification message, the electronic device may display the notification message A at the top of a display interface of a notification center, so that a user can first view the notification message A when opening the notification center.

In another example, when the electronic device determines that the notification message A belongs to a second category, for example, the second category may be a social communication or service reminder notification message, the electronic device may display the notification message A in the middle of the display interface. If no message is displayed at the top of the notification center, the notification message A may be displayed at the top of the display interface of the notification center.

In another example, when the electronic device determines that the notification message A belongs to a third category, for example, the third category may be a content information notification message, the electronic device may display the notification message A at the bottom of the display interface. If no message is displayed at the top or in the middle of the notification center, the notification message A may be displayed at the top of the display interface of the notification center. If a notification message is displayed at the top of the notification center, and no message is displayed in the middle of the notification center, the notification message A may be displayed in the middle of the notification center.

It should be understood that notification messages of different categories have different priorities. For example, the electronic device may prestore a priority relationship between categories. A priority of the first category is higher than a priority of the second category, and a priority of the second category is higher than a priority of the third category. Each category of notification message may be displayed in one display partition. When there are a plurality of notification messages in a same display partition, the plurality of notification messages may be arranged in a chronological order.

It should be further understood that, for each notification message, the electronic device may perform determining by using the foregoing steps. A plurality of notification messages sent by a same app may alternatively belong to different categories. In this case, the electronic device may display the plurality of notification messages in different display partitions.

In this way, an important notification message may be displayed at the top, so that the user can more easily view the important notification message, thereby reducing a possibility that the user misses the important notification.

In an embodiment of this application, after receiving a notification message, the electronic device may first determine whether the notification message is marked with a category; when determining that the notification message is marked with the category, further determine whether the marked category is correct; and when determining that the marked category is correct, display the notification message A in the display partition based on the category of the notification message A. In this way, the electronic device may display notification messages of different categories in different display partitions, and an important notification message may be displayed at the top of the display interface of the notification center, so that the user can be prevented from missing the important notification message.

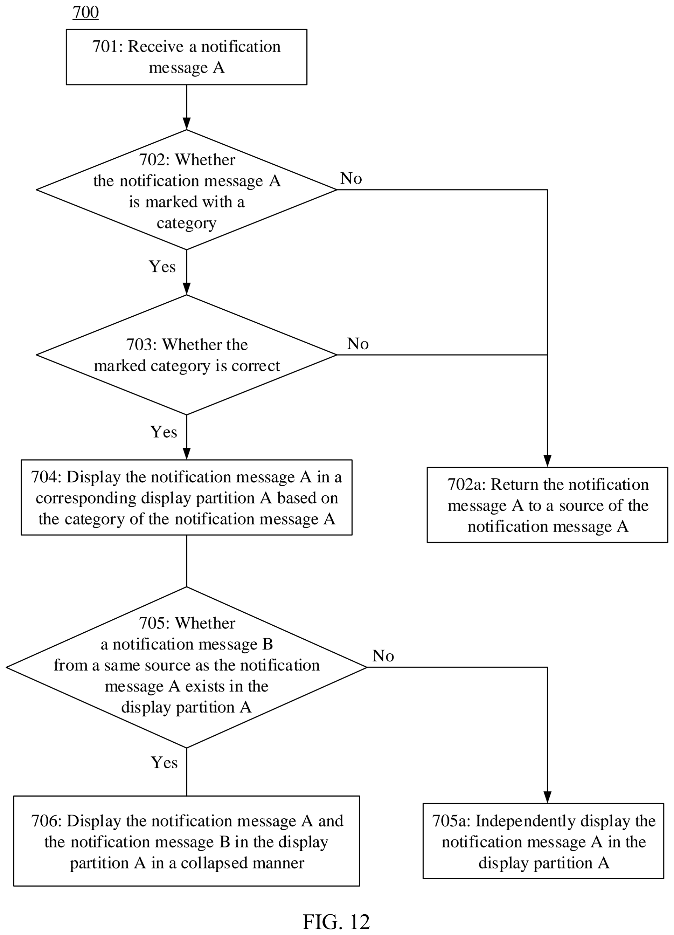

FIG. 12 is a schematic flowchart of determining a display partition of a notification message according to an embodiment of this application. The method 700 may be applied to an electronic device, and the method 700 may include step 701 to step 704.

701: The electronic device receives a notification message A.

702: The electronic device determines whether the notification message A is marked with a category.

702a: The electronic device returns the notification message A to a source of the notification message A.

703: When determining that the notification message A is marked with the category, the electronic device determines whether the marked category is correct.

704: The electronic device displays the notification message A in a corresponding display partition based on the category of the notification message A.

It should be understood that, for steps 701 to 704, refer to the related descriptions of steps 601 to 604. For brevity, details are not described herein again.

705: The electronic device determines whether a notification message B from a same source as the notification message A exists in a display partition A.

When the electronic device determines to display the notification message A in the display partition A, the following steps are included.

705a: When it is determined that the notification message B from the same source as the notification message A does not exist in the display partition A, independently display the notification message A in the display partition A.

For example, refer to FIG. 9(b). The notification message A may be a notification message pushed by app2 at "07:51 ". When determining that the notification message A belongs to a first category, the electronic device may display the notification message A in the display partition A, and no other notification message from a same source as the notification message A exists in the display partition A. In this case, the notification message A is independently displayed in the display partition A.

706: When it is determined that the notification message B from the same source as the notification message A exists in the display partition A, display the notification message A and the notification message B in the display partition A in a collapsed manner.

Herein, that the notification message A and the notification message B are displayed in a collapsed manner may be understood as that the notification message A and the notification message B are displayed in one display card. For example, refer to FIG. 3(b). The notification message A may be a notification message of app2. When the notification message A needs to be displayed in a display partition of content information, there are also a plurality of notification messages of app2 in the display partition. In this case, the electronic device combines the notification message A and the previous notification messages into one display card for collapsed display.

It should be understood that, for each notification message, the electronic device may perform determining by using the foregoing steps. A plurality of notification messages sent by a same app may alternatively belong to different categories. In this case, the electronic device may display the plurality of notification messages in different display partitions.

In an embodiment of this application, when the electronic device displays different notification messages A in different display partitions based on categories, if another notification message from a same source as the notification message A exists in a same display partition, the notification message A and the notification message from the same source may be combined for collapsed display; or if no other notification message from a same source as the notification message A exists in a same display partition, the notification message A may be independently displayed.

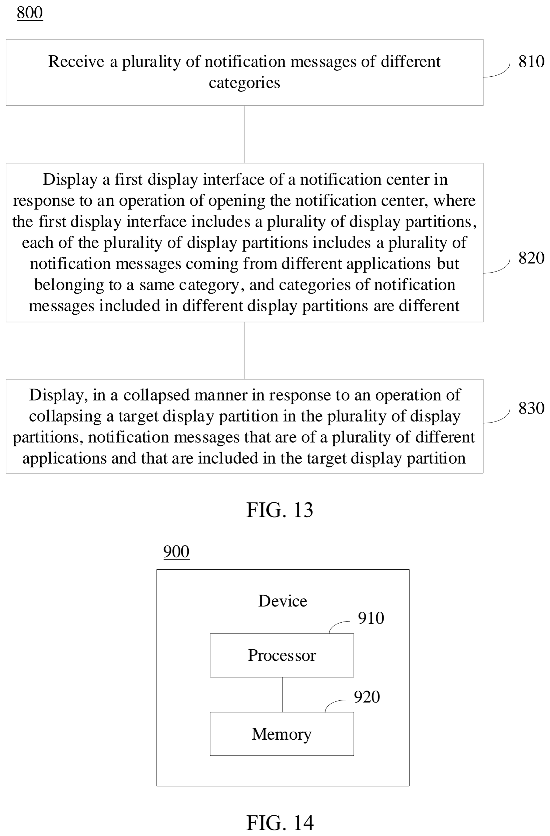

FIG. 13 is a schematic flowchart of a display method according to an embodiment of this application. As shown in FIG. 13, the method 800 may be applied to an electronic device, and the method 800 may include step 810 to step 830.

810: The electronic device receives a plurality of notification messages of different categories.

The plurality of notification messages of the different categories may be from a same application, or may be from different applications.

It may be understood that, when pushing the notification messages to the electronic device, the application may perform tag classification on the notification messages. For details, refer to the foregoing related descriptions.

820: The electronic device displays a first display interface of a notification center in response to an operation of opening the notification center, where the first display interface includes a plurality of display partitions, each of the plurality of display partitions includes a plurality of notification messages coming from different applications but belonging to a same category, and categories of notification messages included in different display partitions are different.

It should be understood that, for the operation of opening the notification center, refer to the foregoing related descriptions.

For example, refer to FIG. 4(a) to FIG. 4(e). The first display interface may be the display interface 220, and the plurality of display partitions may be a display partition corresponding to a live notification message (for example, a display partition in which the display card 221 is located), a display partition corresponding to a notification message of a social communication category (for example, a display partition in which the display card 222 is located), and a display partition corresponding to content information (for example, a display partition in which the display card 224 to the display card 227 are located).

It may be understood that the first display interface may further include another category of notification message, for example, a notification message of a service reminder category, for example, an account balance change reminder message or a schedule reminder message.

In some other examples, there may be one or more notification messages of a same application. This is not limited in this embodiment of this application.

It should be further understood that the foregoing notification message category is merely an example. In other examples, another category may be further included.

830: The electronic device displays, in a collapsed manner in response to an operation of displaying a target display partition in the plurality of display partitions, notification messages that are of a plurality of different applications and that are included in the target display partition.

For example, refer to FIG. 4(b) and FIG. 4(c). The target display partition may be a display partition corresponding to content information, and the operation of collapsing the target display partition may be an operation of tapping the collapsing function button 2231 by a user. Then, the electronic device may display the target display partition in a collapsed manner.

In some other examples, the operation of collapsing the target display partition may alternatively be another operation, for example, an operation of sliding upward in the target display partition.

In an embodiment of this application, after receiving the plurality of notification messages of the different categories, the electronic device may display the notification messages in different display partitions based on the categories of the notification messages. After detecting the operation of collapsing the target display partition by the user, the electronic device may display, in a collapsed manner, the notification messages that are of the plurality of different applications and that are included in the target display partition.

In this way, when a large quantity of notification messages are displayed in the target display partition, the user may conveniently collapse the notification messages in batches, to make the display interface of the notification center more concise.

In some embodiments, the electronic device collapses the notification messages that are of the plurality of different applications and that are included in the target display partition into one collapsed card for display, and the method 800 may further include:

In response to an operation of sliding on the collapsed card, the electronic device displays a deletion function button for deleting the collapsed card.

The electronic device deletes the collapsed card in response to an operation of tapping the deletion function button.

For example, refer to FIG. 4(c) and FIG. 4(d). The collapsed card may be the display card 231, and the deletion function button may be the deletion function button 241.

In some other examples, when the electronic device detects an operation of touching and holding the collapsed card by the user, the electronic device may display the deletion function button for deleting the collapsed card; or when the electronic device detects that the user slides toward one side on the collapsed card, the electronic device may directly delete the collapsed card. This is not limited in this embodiment of this application.

Based on this embodiment ofthis application, the electronic device may collapse, based on the collapsing operation of the user, the notification messages that are of the plurality of different applications and that are included in the target display partition into one collapsed card for display. When detecting the operation of sliding on the collapsed card by the user, the electronic device may display the deletion function button for deleting the collapsed card. When detecting the operation of tapping the deletion function button by the user, the electronic device may delete the collapsed card. In this way, the user may delete all the notification messages in the target display partition in batches.

In some other examples, the electronic device may alternatively collapse the notification messages of the different applications into two or more collapsed cards based on time information. For example, one collapsed card displays notification messages in a preset time t, and one collapsed card displays notification messages before the preset time t.

In some embodiments, the electronic device collapses the notification messages that are of the plurality of different applications and that are included in the target display partition into one collapsed card for display, and the method 800 may further include:

The electronic device deletes the collapsed card in response to an operation of sliding on the collapsed card.

For example, when detecting an operation of sliding rightward on the collapsed card by the user, the electronic device may directly delete the collapsed card.

Based on this embodiment of this application, the user may conveniently delete all the notification messages in the target display partition in batches, to simplify the display interface of the notification center.

In some embodiments, the target display partition further includes a collapsing function button, and displaying, in a collapsed manner in response to the operation of collapsing the target display partition in the plurality of display partitions, the notification messages that are of the plurality of different applications and that are included in the target display partition includes:
in response to an operation of tapping the collapsing function button, displaying, in a collapsed manner, the notification messages that are of the plurality of different applications and that are included in the target display partition.

Based on this embodiment of this application, the user may conveniently display, in a collapsed manner, the notification messages of the plurality of different applications in the target display partition by tapping the collapsing function button.

According to the technical solution, a collapsing guide may be provided for the user, so that the user can more easily learn how to collapse the target display partition.

In some other examples, the operation of collapsing the target display partition may alternatively be an operation of sliding upward in the target display partition by the user.

In some embodiments, the method 800 further includes:
displaying a second display interface in response to an operation of closing the notification center, where the second display interface is a display interface displayed by the electronic device before the first display interface; and
displaying the first display interface in response to an operation of opening the notification center again, where the notification messages that are of the plurality of different applications and that are included in the target display partition in the first display interface are still displayed in a collapsed manner.

For example, refer to FIG. 5(a) to FIG. 5(g). The target display partition may be a display partition corresponding to content information, the first display interface may be the display interface 220, and the second display interface may be the display interface 210.

It should be understood that the second display interface may alternatively be a display interface of an application. This is not limited in this embodiment of this application.

Based on this embodiment of this application, after the user returns from the notification center to the previously displayed second display interface, the electronic device may display the first display interface again in response to the operation of opening the notification center again by the user, and the collapsed target display partition in the first display interface is still in a collapsed state, so that the notification center of the electronic device can retain a use habit of the user, and the user does not perform a plurality of collapsing operations.

In some embodiments, the method 800 further includes:
in response to an operation of expanding the target display partition by the user, displaying, in an expanded manner, the notification messages that are of the plurality of different applications and that are included in the target display partition.

For example, refer to FIG. 5(e) and FIG. 5(f). The operation of expanding the target display partition may be an operation of tapping the expanding function button 2231 by the user. The operation of expanding the target display partition may alternatively be an operation of sliding downward on the display card 231 by the user.

Based on this embodiment of this application, when detecting the operation of expanding the target display partition by the user, the electronic device may display the notification messages of the plurality of different applications in the target display partition in an expanded manner. According to the technical solution, when the user wants to view a notification message, the user may find, by performing an operation of expanding a target display card, the notification message that the user wants to view.

In some embodiments, displaying, in an expanded manner, the notification messages that are of the plurality of different applications and that are included in the target display partition includes:
displaying, on a same target display card in a collapsed manner, a plurality of notification messages of a same category that belong to a same application.

For example, refer to FIG. 5(f). The target display card may be the display card 224. The plurality of notification messages of the same category that belong to the same application are collapsed on the display card 224, and notification messages of other applications are displayed in an expanded manner.

Based on this embodiment of this application, when there are the plurality of notification messages of the same category that belong to the same application, when the electronic device expands the target display partition, the notification messages of the different applications are displayed in an expanded manner, but the plurality of notification messages of the same category that belong to the same application are displayed in a collapsed manner on the same target display card. Therefore, when there are a large quantity of notification messages, the user can view, as much as possible, notification messages sent by different applications.

In some other examples, the electronic device may alternatively display all the notification messages in an expanded manner. This is not limited in this embodiment of this application.

In some embodiments, the method 800 further includes:
in response to an operation of expanding the target display card by the user, displaying, in an expanded manner, the plurality of notification messages of the same category that belong to the same application.

For example, refer to FIG. 5(f) and FIG. 5(g). The operation of expanding the target display card may be an operation of tapping the function button 2241 by the user, and the electronic device may display the display card 224 in an expanded manner based on the operation.

Based on this embodiment of this application, when detecting the operation of expanding the target display card by the user, the electronic device may display, in an expanded manner, the plurality of notification messages of the same category that belong to the same application, so that the user can view each notification message.

In some embodiments, the displaying in a collapsed manner includes at least one of the following displaying:
displaying application icons of the plurality of different applications in an arranged manner; displaying display cards corresponding to the notification messages of the plurality of different applications in grids; or displaying display cards corresponding to the notification messages of the plurality of different applications in a stacked manner.

For example, refer to FIG. 6(a). After the plurality of notification messages are collapsed, the application icons of the different applications may be displayed in an arranged manner. Refer to FIG. 6(b) and FIG. 6(c). After the plurality of notification messages are collapsed, the display cards corresponding to the notification messages of the plurality of different applications are displayed in grids. Refer to FIG. 6(d). After the plurality of notification messages are collapsed, the display cards corresponding to the notification messages of the plurality of different applications are displayed in a stacked manner.

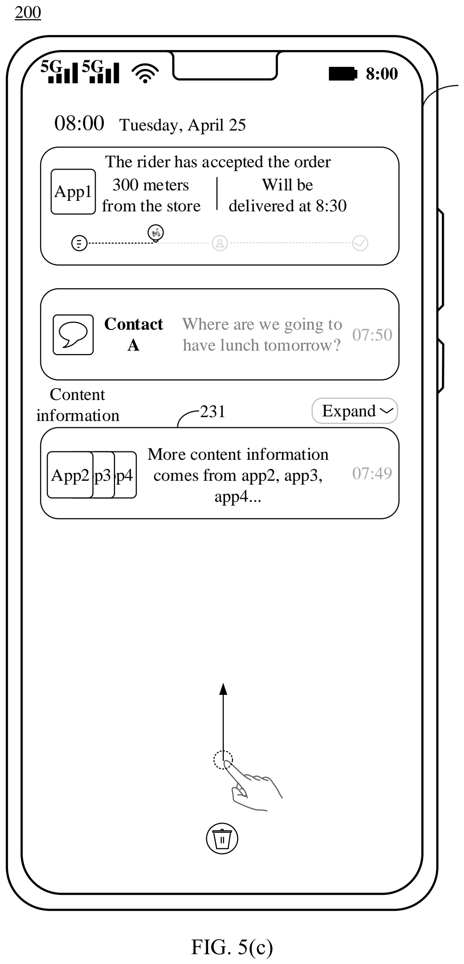

It should be understood that a specific form of the displaying in a collapsed manner is not limited in this embodiment of this application. For example, after the collapsing, the electronic device may further display an icon of an application and a partial text prompt. For example, refer to FIG. 5(c). For example, the displaying in a collapsed manner is a layout form on the collapsed display card 231.

Based on this embodiment of this application, after the notification messages are displayed in a collapsed manner, there may be a plurality of display manners, thereby improving display flexibility.

In some embodiments, the first display interface further includes identifiers indicating titles of the plurality of display partitions.

For example, the identifiers may be title names; or the identifiers may be colors, and different display partitions have different identifier colors; or the identifiers may be shapes. This is not limited in this embodiment of this application.

For example, refer to FIG. 8(b). The first display interface may be the display interface 350, and the display interface 350 may further include a title name of each display partition.

Based on this embodiment of this application, the first display interface further includes the identifiers indicating the titles of the plurality of display partitions. Therefore, the user can distinguish between the display partitions more easily.

FIG. 14 is a block diagram of an electronic device according to an embodiment of this application. As shown in FIG. 14, the electronic device 900 may include one or more processors 910 and one or more memories 920. The one or more memories 920 store one or more instructions. When the instruction is executed by the one or more processors 910, the display method in any one of the foregoing possible implementations is performed.

For example, the electronic device 900 may be the foregoing electronic device 100, electronic device 200, electronic device 300, electronic device 400, or electronic device 500.

An embodiment of this application further provides a chip. The chip includes a processor and a communication interface, the communication interface is configured to receive a signal and transmit the signal to the processor, and the processor processes the signal, so that the display method in any one of the foregoing possible implementations is performed.

The chip may be a chip system, an independent chip, or the like.

An embodiment further provides a readable storage medium. The readable storage medium stores instructions. When the instructions are run on a device, the device performs the foregoing related method steps to implement the display method in the foregoing embodiments.

An embodiment further provides a program product. When the program product runs on a device, the device is enabled to perform the foregoing related steps to implement the display method in the foregoing embodiments.

In addition, an embodiment of this application further provides an apparatus. The apparatus may be specifically a chip, a component, or a module. The apparatus may include a processor and a memory that are connected. The memory is configured to store instructions. When the apparatus runs, the processor may execute the instructions stored in the memory, to enable the apparatus to perform the display method in the foregoing method embodiments.

The device, the readable storage medium, the program product, or the apparatus provided in embodiments may be configured to perform the corresponding methods provided above. Therefore, for beneficial effects that can be achieved, refer to beneficial effect of the corresponding methods provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display method, wherein the method is applied to an electronic device, and the method comprises:
receiving a plurality of notification messages of different categories;
displaying a first display interface of a notification center in response to an operation of opening the notification center, wherein the first display interface comprises a plurality of display partitions, each of the plurality of display partitions comprises a plurality of notification messages coming from different applications but belonging to a same category, and categories of notification messages comprised in different display partitions are different; and
displaying, in a collapsed manner in response to an operation of collapsing a target display partition in the plurality of display partitions, notification messages that are of a plurality of different applications and that are comprised in the target display partition.

2. The method according to claim 1, wherein the electronic device collapses the notification messages that are of the plurality of different applications and that are comprised in the target display partition into one collapsed card for display, and the method further comprises:
in response to an operation of sliding on the collapsed card, displaying a deletion function button for deleting the collapsed card; and
deleting the collapsed card in response to an operation of tapping the deletion function button.

3. The method according to claim 1, wherein the electronic device collapses the notification messages that are of the plurality of different applications and that are comprised in the target display partition into one collapsed card for display, and the method further comprises:
deleting the collapsed card in response to an operation of sliding on the collapsed card.

4. The method according to any one of claims 1 to 3, wherein the target display partition further comprises a collapsing function button, and displaying, in a collapsed manner in response to the operation of collapsing the target display partition in the plurality of display partitions, the notification messages that are of the plurality of different applications and that are comprised in the target display partition comprises:
in response to an operation of tapping the collapsing function button, displaying, in a collapsed manner, the notification messages that are of the plurality of different applications and that are comprised in the target display partition.

5. The method according to any one of claims 1 to 4, wherein the method further comprises:
displaying a second display interface in response to an operation of closing the notification center, wherein the second display interface is a display interface displayed by the electronic device before the first display interface; and
displaying the first display interface in response to an operation of opening the notification center again, wherein the notification messages that are of the plurality of different applications and that are comprised in the target display partition in the first display interface are still displayed in a collapsed manner.

6. The method according to any one of claims 1 to 5, wherein the method further comprises:
in response to an operation of expanding the target display partition by a user, displaying, in an expanded manner, the notification messages that are of the plurality of different applications and that are comprised in the target display partition.

7. The method according to claim 6, wherein when there are a plurality of notification messages of a same category that belong to a same application, displaying, in an expanded manner, the notification messages that are of the plurality of different applications and that are comprised in the target display partition comprises:
displaying, on a same target display card in a collapsed manner, the plurality of notification messages of the same category that belong to the same application.

8. The method according to claim 7, wherein the method further comprises:
in response to an operation of expanding the target display card by the user, displaying, in an expanded manner, the plurality of notification messages of the same category that belong to the same application.

9. The method according to any one of claims 1 to 8, wherein the displaying in a collapsed manner comprises at least one of the following displaying:
displaying application icons of the plurality of different applications in an arranged manner;
displaying display cards corresponding to the notification messages of the plurality of different applications in grids; or
displaying display cards corresponding to the notification messages of the plurality of different applications in a stacked manner.

10. The method according to any one of claims 1 to 9, wherein the first display interface further comprises identifiers indicating titles of the plurality of display partitions.

11. An electronic device, comprising one or more processors and one or more memories, wherein the one or more memories store one or more programs, and when the one or more programs are executed by the one or more processors, the display method according to any one of claims 1 to 10 is performed.

12. A display apparatus, comprising a module configured to perform the display method according to any one of claims 1 to 10.

13. A chip, wherein the chip comprises a processor and a communication interface, the communication interface is configured to receive a signal and transmit the signal to the processor, and the processor processes the signal, so that the display method according to any one of claims 1 to 10 is performed.

14. A readable storage medium, wherein the readable storage medium stores instructions, and when the instructions are run on a device, the display method according to any one of claims 1 to 10 is performed.
